# EUROPÄISCHE PATENTSCHRIFT

(11) **EP 3 242 829 B1**
(45) Veröffentlichungstag und Bekanntmachung des Hinweises auf die Patenterteilung: **20.05.2020**
(21) Anmeldenummer: 15813787.7
(22) Anmeldetag: 15.12.2015
(51) Int. Cl.: B62D 5/00, B62D 15/02, B60T 7/22, B60W 10/20, B60W 50/12

(54) **VERFAHREN ZUR ASSISTENZ EINES FAHRERS EINES FAHRZEUGS UND FAHRASSISTENZSYSTEM**
METHOD FOR PROVIDING ASSISTANCE TO A DRIVER OF A VEHICLE AND DRIVING ASSISTANCE SYSTEM
PROCÉDÉ D'AIDE AU CONDUCTEUR D'UN VÉHICULE ET SYSTÈME D'AIDE À LA CONDUITE

(30) Priorität: 09.01.2015 DE 102015200171
(43) Veröffentlichungstag der Anmeldung: 15.11.2017
(73) Patentinhaber: Robert Bosch GmbH, 70442 Stuttgart (DE)
(72) Erfinder: STAMM, Axel, 70499 Stuttgart (DE); HELMLE, Michael, 73732 Esslingen (DE); SCHNEIDER, Marcus, 71642 Ludwigsburg (DE)
(86) Internationale Anmeldenummer: PCT/EP2015/079865
(87) Internationale Veröffentlichungsnummer: WO 2016/110382

(56) Entgegenhaltungen:
- EP-A1- 2 418 142
- WO-A1-2004/103798
- DE-A1- 10 144 797
- DE-B3-102012 022 387
- US-B1- 6 178 365

## Beschreibung

Die Erfindung betrifft ein Verfahren zur Assistenz eines Fahrers eines Fahrzeugs, wobei das Fahrzeug ein Fahrassistenzsystem umfasst, welches zumindest ein zeitweiliges autonomes Fahren ermöglicht und nach dem Beenden des autonomen Fahrens den Fahrer über ein Signal zumindest zur Übernahme der Querführung des Fahrzeugs auffordert. Weitere Aspekte der Erfindung betreffen ein Computerprogramm, welches das Verfahren ausführt sowie ein Fahrassistenzsystem.

### Stand der Technik

In modernen Fahrzeugen werden Fahrassistenzsysteme eingesetzt, um den Fahrer eines Fahrzeugs bei der Durchführung verschiedener Fahrmanöver zu unterstützen. Solche Fahrmanöver umfassen beispielsweise das Ein- und/oder Ausparken des Fahrzeugs aus einer Parklücke, das Ein- und/oder Ausfahren aus einer Garage oder das Führen des Fahrzeugs durch Engstellen wie Einfahrten oder Baustellen. Dabei sind im Stand der Technik halbautomatische oder auch halbautonom genannte Fahrassistenzsysteme bekannt, bei denen durch das Fahrassistenzsystem entweder die Längsführung des Fahrzeugs, d. h. das Beschleunigen und Bremsen des Fahrzeugs, oder die Querführung, d. h. das Lenken des Fahrzeugs, übernommen wird. Bei vollautomatischen oder auch vollautonom genannten Fahrassistenzsystemen übernimmt das Fahrassistenzsystem sowohl die Längs- als auch die Querführung des Fahrzeugs. Dem Fahrer obliegt in diesem Fall lediglich eine Kontroll- und Überwachungsfunktion.

Aus DE 10 2010 001368 A1 ist ein Verfahren zur Unterstützung eines Fahrers eines Fahrzeugs bei einem Fahrmanöver bekannt. Bei dem Fahrmanöver kann es sich beispielsweise um das Einparken in eine Parklücke handeln. Zur Unterstützung des Fahrers ist eine automatische Steuerung vorgesehen, die sowohl eine automatische Lenkung als auch eine automatische Längsführung des Fahrzeugs umfasst. Ferner ist vorgesehen, dass die für die automatische Steuerung verwendeten Systeme überwacht werden und, falls eine Störung festgestellt wird, die automatische Steuerung beendet wird. Das Beenden der automatischen Steuerung wird dem Fahrer angezeigt, beispielsweise über akustische, optische oder haptische Mittel.

Aus DE 10 2010 031 672 A1 ist ein weiteres Verfahren zur Unterstützung eines Fahrers eines Kraftfahrzeugs bekannt. Dabei ist vorgesehen, das Fahrzeug automatisch entlang einer zuvor berechneten Trajektorie zu führen und nach Beendigung des Fahrmanövers die Steuerung des Fahrzeugs wieder an den Fahrer zu übergeben. Dabei ist vorgesehen, nach der Übergabe an den Fahrer diesem Hinweise zu geben, in welche Richtung zu lenken ist, um beispielsweise eine Kollision mit dem Gegenverkehr beim Ausparken des Fahrzeugs zu vermeiden. Beispielsweise kann dazu ein Moment auf das Lenkrad aufgebracht werden, welches dazu führt, dass der Fahrer das Lenkrad in die richtige Richtung bewegt.

Aus DE 101 44 797 A1 ist ein Verfahren sowie ein Regel- und Steuersystem zur Einstellung autonomer Fahrfunktionen in einem Fahrzeug bekannt. Das System ist dazu eingerichtet, ein Fahrzeug sowohl hinsichtlich der Längsführung als auch hinsichtlich der Querführung autonom zu führen. Im Fall eines Übergangs vom automatischen Fahren zum manuellen Fahren, der durch den Fahrzeugrechner veranlasst wird, ist vorgesehen, dass eine Fahrerreaktionszeit eingeräumt wird, innerhalb der eine Fahrerreaktion nach der Anforderung bzw. Übergabeaufforderung durch die Steuer- und Regelungseinheit erfolgen muss. Das Dokument DE 101 44 797 A1 ist als nächstliegender Stand der Technik nach dem Oberbegriff des Anspruchs 1 zu sehen.

EP 2 418 142 A1 beschreibt ein Verfahren zum Betreiben eines Spurhalteassistenten eines Fahrzeugs. Dabei ist vorgesehen, kein Lenkmoment gegen den Willen des Fahrers aufzubringen. Entsprechend wird die Spurhalteassistenzfunktion beendet, wenn erkannt wird, dass der Fahrer lenken möchte oder beispielsweise ein Bremspedal betätigt.

Bei den aus dem Stand der Technik bekannten Lösungen tritt das Problem auf, dass, falls der Fahrer erst verspätet in die Lenkung eingreift, dieser überreagieren kann und beim Ergreifen des Lenkrads dieses versehentlich verdreht. Dies ist auch als Überreißen der Lenkung bekannt. Dies ist insbesondere dann problematisch, wenn der Fahrer ungeübt ist oder wenn die Aufforderung zur Übernahme der Lenkung bzw. der Querführung überraschend erfolgt.

### Offenbarung der Erfindung

Es wird ein Verfahren zur Assistenz eines Fahrers eines Fahrzeugs vorgeschlagen, wobei das Fahrzeug ein Fahrassistenzsystem umfasst, welches zumindest ein zeitweiliges autonomes Fahren ermöglicht und nach dem Beenden des autonomen Fahrens den Fahrer über ein Signal zur Übernahme der Querführung des Fahrzeugs auffordert. Ferner ist vorgesehen, dass die Lenkung des Fahrzeugs nach der Aufforderung zur Übernahme der Querführung für eine vorgegebene Zeitspanne versteift wird.

Erfindungsgemäß erfolgt das Versteifen der Lenkung durch
a) Verringern einer Lenkunterstützung innerhalb der vorgegebenen Zeitspanne und/oder
b) Aufbringen eines Gegenmoments, welches einer Lenkbewegung des Fahrers entgegengesetzt ist, wenn die Lenkbewegung innerhalb der vorgegebenen Zeitspanne erfolgt und/oder
c) Verändern einer Lenkübersetzung während der vorgegebenen Zeitspanne derart, dass Lenkradeinschläge verringerte Radlenkwinkeleinschläge zur Folge haben.

Dabei wird die vorgegebene Zeitspanne in Abhängigkeit der Geschwindigkeit des Fahrzeugs, eines Abstands zu einem Hindernis, eines Abstands zu einer Fahrspurbegrenzung oder einer Kombination von mehreren dieser Parameter gewählt, wobei die vorgegebene Zeitspanne für die Versteifung der Lenkung mit dem Zeitpunkt beginnt, an dem der Fahrer an ein Lenkrad fasst oder die vorgegebene Zeitspanne mit dem Zeitpunkt beginnt, an dem der Fahrer mit dem Lenken beginnt.

Bei dem Fahrassistenzsystem kann es sich beispielsweise um ein vollautomatisches bzw. vollautonomes Fahrassistenzsystem handeln, bei dem das Fahrassistenzsystem sowohl die Längs- als auch die Querführung des Fahrzeugs übernimmt. Dabei wird unter dem Begriff Längsführung das Beschleunigen und Abbremsen des Fahrzeugs verstanden und mit dem Begriff Querführung wird die Lenkung des Fahrzeugs bezeichnet. Ein solches vollautomatisches bzw. vollautonomes Fahrassistenzsystem führt ein Fahrmanöver, bei dem das Fahrzeug entlang einer Trajektorie geführt wird, vollständig autonom, d. h. selbsttätig aus. Dem Fahrer obliegt dabei lediglich eine Überwachungsfunktion. Hierbei wird unter dem Begriff Trajektorie die Bahnkurve bezeichnet, über die sich das Fahrzeug bei der Durchführung des Fahrmanövers bewegt.

Alternativ kann es sich bei dem Fahrassistenzsystem um ein halbautomatisches bzw. halbautonomes Fahrassistenzsystem handeln, bei dem das Fahrassistenzsystem entweder die Längsführung des Fahrzeugs oder die Querführung des Fahrzeugs übernimmt. Der Fahrer übernimmt dementsprechend je nach Ausgestaltung des halbautomatischen Fahrassistenzsystems die Querführung oder die Längsführung des Fahrzeugs und übt dabei zugleich eine Kontrollfunktion aus.

Je nach Ausgestaltung des Fahrassistenzsystems kann dieses die gesamte Fahrt des Fahrzeugs vollautomatisch bzw. vollautonom durchführen, so dass der Fahrer als ein Fahrgast im eigenen Fahrzeug angesehen werden kann. Des Weiteren ist es denkbar, dass das Fahrassistenzsystem den Fahrer nur bei bestimmten Fahrmanövern unterstützt, beispielsweise beim Ein- oder Ausparken aus einer Parklücke, beim Ein- oder Ausfahren aus einer Garage, beim Passieren einer Engstelle, das Durchfahren einer Baustelle und dergleichen. Ein weiteres Beispiel für ein solches Fahrmanöver ist das Abbiegen um ein für den Fahrer schwer verfolgbares Hindernis, beispielsweise eines welches so bodennah ist, dass es unterhalb des Sichtbereichs der Außenspiegel ist.

Im Folgenden wird unter dem Begriff autonomes Fahrassistenzsystem bzw. autonom durchgeführtes Fahrmanöver sowohl ein halbautonom bzw. halb automatisch durchgeführtes Fahrmanöver verstanden, bei dem der Fahrer noch die Längsführung des Fahrzeugs übernimmt, als auch ein vollautomatisch bzw. vollautonom durchgeführtes Fahrmanöver, bei dem der Fahrer lediglich eine Kontrollfunktion ausübt.

Eine Übergabe von zumindest der Querführung des Fahrzeugs ist erforderlich, wenn entweder das autonom durchgeführte Fahrmanöver abgeschlossen ist, beispielsweise nach erfolgtem Ausparken des Fahrzeugs aus einer Parklücke, oder wenn aufgrund einer Störung das autonome Fahrmanöver nicht mehr fortgesetzt werden kann. Eine solche Störung kann beispielsweise ein Defekt des Fahrassistenzsystems sein. Des Weiteren kann die Durchführung eines autonomen Fahrmanövers dadurch gestört werden, dass beispielsweise der Empfang eines Satellitennavigationssystems, wie beispielsweise GPS, gestört ist oder dass zur Durchführung des autonomen Fahrmanövers notwendige Markierungen, wie beispielsweise Fahrbahnmarkierungen, beispielsweise aufgrund von Baumaßnahmen, nicht zur Verfügung stehen.

Insbesondere bei einem Fahrassistenzsystem, welches nicht nur einzelne beschränkte Fahrmanöver, wie beispielsweise ein Ausparken des Fahrzeugs, autonom durchführt, sondern das Fahrzeug während der gesamten Fahrt oder eines wesentlichen Teils davon autonom führt, ist es bevorzugt, den Fahrer so rechtzeitig auf die Übernahme von zumindest der Querführung hinzuweisen, dass ihm eine gewisse Übernahmezeit verbleibt, bis er die Lenkung wieder übernehmen muss. So ist es beispielsweise denkbar, über ein Satellitennavigationssystem die Position des Fahrzeugs zu überwachen und vor dem Erreichen einer Problemstelle, wie beispielsweise einer Baustelle mit fehlenden oder nicht automatisch auswertbaren Fahrbahnmarkierungen, den Fahrer zur Übernahme der Querführung aufzufordern. Dabei kann auch die momentane Geschwindigkeit des Fahrzeugs berücksichtigt werden, so dass die Aufforderung so rechtzeitig erfolgt, dass dem Fahrer bis zur Übernahme der Lenkung eine vorgebbare Übernahmezeit verbleibt. Diese Übernahmezeit kann beispielsweise im Bereich von 2 bis 10 Sekunden, insbesondere im Bereich von 4 bis 7 Sekunden betragen.

Die Aufforderung zur Übernahme von zumindest der Querführung des Fahrzeugs kann beispielsweise über akustische oder optische Signale erfolgen. Des Weiteren sind haptische Signale denkbar, wobei es dabei bevorzugt ist, beispielsweise den Fahrersitz oder das Lenkrad in Vibration zu versetzen oder einen kurzen Bremseingriff durchzuführen, der zu einem spürbaren Ruck im Fahrzeug führt.

Durch das Vorsehen der Übernahmezeit wird dem Fahrer ermöglicht, sich einen Überblick über die aktuelle Verkehrssituation zu verschaffen, bevor er die Querführung des Fahrzeugs übernehmen muss.

Ferner ist vorgesehen, dass die Lenkung des Fahrzeugs nach der Aufforderung zur Übernahme der Querführung für eine vorgegebene Zeitspanne versteift wird. Dadurch wird verhindert, dass der Fahrer beim Ergreifen des Lenkrads dieses versehentlich verdreht, was auch als Überreißen der Lenkung bekannt ist. Dies ist insbesondere dann ein Problem, wenn der Fahrer ungeübt ist oder wenn die Aufforderung zur Übernahme der Lenkung des Fahrzeugs für den Fahrer überraschend erfolgt.

Ohne die vorgesehene Versteifung der Lenkung ist es leicht möglich, dass der Fahrer beim Ergreifen des Lenkrads dieses geringfügig verdreht, beispielsweise um einen Winkel von 15°. Wird der unbeabsichtigte Lenkradeinschlag nur über eine kurze Zeit, beispielsweise eine halbe Sekunde, aufrechterhalten und bewegt sich das Fahrzeug nur mit geringer Geschwindigkeit, wie sie beispielsweise beim Ein- und/oder Ausparken üblich ist, beispielsweise 12 km/h, so ergibt sich für einen typischen Achsabstand von 2,5 m ein Ausscheren des Fahrzeugs aus seiner Fahrbahn von etwa 10 cm. Bei den geringen Geschwindigkeiten, wie sie insbesondere beim Ein- und/oder Ausparken üblich sind, kann dies gefahrentechnisch vielleicht vergleichsweise unkritisch sein, sofern der Fahrer rasch reagiert und den Lenkeinschlag korrigiert, jedoch kommt es beim Ein- und Ausparken oftmals auf gerade diese Genauigkeit im cm-Bereich an.

Bei einer höheren Geschwindigkeit des Fahrzeugs hingegen, beispielsweise einer Geschwindigkeit von 100 km/h, die beispielsweise bei der Fahrt auf Landstraßen oder Autobahnen üblich ist, führt ein solcher versehentlicher Lenkeinschlag von beispielsweise 15° für eine halbe Sekunde bereits zu einem Ausscheren des Fahrzeugs von über einem Meter. Dies hätte ein Verlassen der Fahrbahn und womöglich eine Kollision mit einem Nachbarfahrzeug oder der Randbebauung und damit einen Unfall zur Folge.

Ein versehentliches Verdrehen des Lenkrads bzw. ein versehentliches Überreißen der Lenkung kann erfindungsgemäß vermieden werden, indem nach der Aufforderung zur Übernahme der Querführung die Lenkung für eine vorgegebene Zeitspanne versteift wird. Dabei wird unter Versteifen verstanden, dass das Verdrehen des Lenkrads erschwert wird und/oder dass die Auswirkungen eines Lenkeinschlags reduziert werden.

Bevorzugt erfolgt das Versteifen der Lenkung dadurch, dass innerhalb der vorgegebenen Zeitspanne eine Lenkunterstützung verringert wird.

Im Stand der Technik sind Vorrichtungen zur Lenkunterstützung unter dem Begriff Servolenkung bzw. Servounterstützung bekannt. Dabei wird beim Verdrehen des Lenkrads durch den Fahrer ein Lenkmoment im Lenkgestänge erzeugt. Dieses Moment wird mittels eines Sensors erfasst. Um das vom Fahrer aufgebrachte Lenkmoment zu verstärken, wird abhängig von einem vorgegebenen Verstärkungsfaktor ein Lenkaktuator betätigt, der ebenfalls ein Moment auf das Lenkgestänge ausübt. Beispielsweise beträgt der Verstärkungsfaktor von 5 bis 10, so dass beispielsweise bei einem vom Fahrer erzeugtem Lenkmoment von beispielsweise 1,5 Nm und einem Verstärkungsfaktor von 10 über den Lenkaktuator ein weiteres Moment von 15 Nm auf das Lenkgestänge ausgeübt wird. Zur vorübergehenden Versteifung der Lenkung innerhalb der vorgegebenen Zeitspanne kann dieser Verstärkungsfaktor auf einen geringeren Wert abgesenkt werden. Dieser geringere Wert kann beispielsweise eine Konstante sein, wie beispielsweise ein Verstärkungsfaktor von 1 oder kann über die vorgegebene Zeitspanne variieren. Beispielsweise ist es denkbar, dass zu Beginn der vorgegebenen Zeitspanne der Verstärkungsfaktor seinen niedrigsten Wert, beispielsweise 1, annimmt und zum Ende der vorgegebenen Zeitspanne seinen maximalen Wert, beispielsweise 10, erreicht.

In einer weiteren bevorzugten Ausführungsform wird die Lenkung versteift, indem ein Gegenmoment, welches einer Lenkbewegung des Fahrers entgegengesetzt ist, aufgebracht wird, wenn die Lenkbewegung innerhalb der vorgegebenen Zeitspanne erfolgt. Das Gegenmoment wird erzeugt, indem ähnlich wie bereits zuvor im Zusammenhang mit der Verringerung einer Lenkunterstützung beschrieben, innerhalb der vorgegebenen Zeitspanne der Verstärkungsfaktor einer Servolenkung bzw. einer Lenkunterstützung modifiziert wird. Zum Aufbringen des Gegenmoments wird ein Verstärkungsfaktor mit einem Wert < 0 vorgegeben. Beispielsweise wird der Verstärkungsfaktor aus dem Bereich von - 0,1 bis -5 bevorzugt aus dem Bereich von -0,5 bis -2 gewählt. Wenn nun beispielsweise der Verstärkungsfaktor auf -0,8 festgelegt wird, dann wird bei einem vom Fahrer erzeugten Lenkmoment von 2,5 Nm ein Gegenmoment von -2 Nm erzeugt. Wiederum ist es betreffend den Verstärkungsfaktor möglich, diesen als eine Konstante, z. B. -0,8, vorzugeben oder innerhalb der vorgegebenen Zeitspanne zu variieren. So ist es beispielsweise möglich, zu Beginn der vorgegebenen Zeitspanne mit dem niedrigsten Wert, beispielsweise -2, zu beginnen und den Verstärkungsfaktor ansteigen zu lassen, so dass dieser am Ende der vorgegebenen Zeitspanne seinen größten Wert annimmt, beispielsweise -0,1.

Des Weiteren ist es denkbar, beide Ansätze zu kombinieren, indem zu Beginn der vorgegebenen Zeitspanne ein negativer Verstärkungsfaktor vorgegeben wird und zwischenzeitlich oder bis zum Ende der vorgegebenen Zeitspanne hin ein positiver verringerter Verstärkungsfaktor vorgegeben wird. So ist es beispielsweise möglich, den Verstärkungsfaktor zu Beginn der vorgegebenen Zeitspanne auf den Wert -0,8 einzustellen, wobei der Verstärkungsfaktor mit fortschreitender Zeit z. B. stufenförmig oder linear ansteigt und zum Ende der vorgegebenen Zeitspanne den Wert 10 annimmt, an dem wieder die übliche Lenkunterstützung durch die Servolenkung bereitgestellt wird.

Des Weiteren ist es bevorzugt, wenn zum Versteifen der Lenkung innerhalb der vorgegebenen Zeitspanne eine Lenkübersetzung verändert, insbesondere verringert wird, so dass Lenkradeinschläge verringerte Radlenkwinkeleinschläge zur Folge haben. Die Lenkübersetzung ist dabei bezogen auf das zwischen Lenkung und den Rädern angeordnete Zwischengetriebe und bezeichnet das Verhältnis zwischen Lenkradeinschlag und dem Radlenkwinkeleinschlag der Vorderräder des Fahrzeugs. Dabei ist es beispielsweise denkbar, dass im Normalfall die Lenkübersetzung 14:1 ist und während der vorgegebenen Zeitspanne auf einen Faktor von 56:1 verändert wird. Bei einer derart reduzierten Lenkübersetzung würde dann ein versehentlicher Lenkradeinschlag von beispielsweise 15° dann nur zu einem Viertel umgesetzt, also anstelle von 1,07° nur etwas weniger als 0,27°. Somit wird durch das Verändern der Lenkübersetzung die Auswirkung des Lenkradeinschlags auf die Räder reduziert. Wiederum ist es denkbar, den Faktor für die veränderte Lenkübersetzung während der vorgegebenen Zeitspanne als Konstante vorzugeben oder zeitlich variabel zu gestalten.

Die Stärke der Versteifung wird bevorzugt abhängig von der Fahrgeschwindigkeit des Fahrzeugs festgelegt, wobei die Versteifung mit zunehmender Geschwindigkeit des Fahrzeugs ansteigt. Wird die Versteifung durch einen Eingriff in den Verstärkungsfaktor einer Servolenkung bzw. einer Lenkunterstützung vorgenommen, so kann die geschwindigkeitsabhängige Versteifung dadurch umgesetzt werden, dass der Eingriff in den Verstärkungsfaktor umso stärker erfolgt, je größer die Geschwindigkeit des Fahrzeugs ist. Wird beispielsweise zur Versteifung der Lenkung die Lenkübersetzung verringert, so wird die Lenkübersetzung umso stärker verringert, je größer die Geschwindigkeit des Fahrzeugs ist.

Bevorzugt erfolgt die Versteifung der Lenkung des Fahrzeugs abhängig von der Lenkrichtung, wobei die Versteifung beim Lenken in Richtung eines Hindernisses oder einer Fahrspurbegrenzung stärker ist, als beim Lenken in Richtung einer freien Fläche.

Die im Fahrzeug vorhandenen Fahrassistenzsysteme sind für ihre Funktion auf Daten über die Umgebung des Fahrzeugs angewiesen. Dazu wird das Fahrzeug mit verschiedenen Sensoren ausgerüstet, beispielsweise Abstandssensoren auf Radar-, Lidar- oder Ultraschallbasis. Des Weiteren kann das Fahrzeug beispielsweise Kamerasysteme umfassen, die Fahrbahnmarkierungen erkennen können. Wird durch diese Sensorsysteme festgestellt, dass sich beispielsweise auf einer Seite des Fahrzeugs Hindernisse, wie beispielsweise andere Fahrzeuge, Leitplanken oder Bäume befinden, die andere Seite jedoch frei ist, so würde ein Überreißen des Lenkrads in Richtung eines solchen Hindernisses zu einem Unfall führen, wohingegen ein Überreißen der Lenkung in die entgegengesetzte Richtung folgenlos bleibt. Um unnötige Eingriffe zu vermeiden, ist es daher bevorzugt, die Versteifung der Lenkung nur dann vorzunehmen, wenn dadurch das Fahrzeug in Richtung eines Hindernisses gesteuert wird. Dies kann beispielsweise dadurch umgesetzt werden, dass der Eingriff in den Verstärkungsfaktor einer Servolenkung nicht oder nur verringert erfolgt, wenn in Richtung einer freien Fläche gelenkt wird. Ebenso kann beim Lenken in Richtung einer freien Fläche auf eine Reduzierung der Lenkübersetzung verzichtet werden oder dieser Eingriff kann geringer ausfallen.

Die vorgegebene Zeitspanne für die Versteifung der Lenkung kann in einer nicht erfindungsgemäßen Ausführungsform des Verfahrens zusammen mit der Aufforderung zur Übernahme der Querführung beginnen. Erfindungsgemäß ist vorgesehen, dass die vorgegebene Zeitspanne für die Versteifung der Lenkung mit dem Zeitpunkt beginnt, an dem der Fahrer an das Lenkrad des Fahrzeugs fasst oder dass die vorgegebene Zeitspanne mit dem Zeitpunkt beginnt, an dem der Fahrer mit dem Lenken beginnt. Der Zeitpunkt, an dem der Fahrer an das Lenkrad fasst bzw. das Lenkrad ergreift, kann beispielsweise über Innenraumkameras, Annäherungssensoren oder Berührungssensoren am Lenkrad festgestellt werden. Beispielsweise eignen sich dazu insbesondere kapazitive oder induktive Näherungssensoren. Alternativ oder zusätzlich kann das Ergreifen des Lenkrads erkannt werden, indem das Lenkmoment überwacht wird. Dabei sind Änderungen des Lenkmoments bzw. das Anwachsen des Lenkmoments über eine vorgegebene Schwelle Indikatoren dafür, dass der Fahrer an das Lenkrad fasst. Die Schwelle für das Erkennen eines Lenkmoments kann beispielsweise auf 1 Nm festgelegt werden, wobei zusätzlich über einen vorgegebenen Zeitraum, beispielsweise 120 ms, eine Mittelung erfolgen kann.

In einer nicht erfindungsgemäßen Ausführungsform kann die vorgegebene Zeitspanne, innerhalb der die Lenkung versteift wird, als Konstante vorgegeben werden, die beispielsweise aus einem Zeitraum von 500 ms bis 1500 ms gewählt wird. Erfindungsgemäß wird die vorgegebene Zeitspanne in Abhängigkeit der Geschwindigkeit des Fahrzeugs, eines Abstands zu einem Hindernis, einem Abstand zu einer Fahrspurbegrenzung oder einer Kombination von mehreren dieser Parameter gewählt. Auf diese Weise kann beispielsweise ein Eingriff in die Lenkung bei geringen Geschwindigkeiten des Fahrzeugs, bei der nur geringe Folgen durch ein versehentliches Überreißen der Lenkung zu erwarten sind, geringer ausfallen. Bei Vorliegen einer Gefahrensituation, beispielsweise wenn zu beiden Seiten des Fahrzeugs Hindernisse festgestellt werden, kann hingegen aus Sicherheitsgründen die vorgegebene Zeitspanne länger gewählt werden.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche beispielsweise auf einem Smartphone oder Tablet ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD, Blu-ray-Disc oder einem USB-Stick. Zusätzlich oder alternativ kann das Computerprogramm auf einer Computereinrichtung, wie etwa auf einem Server, zum Herunterladen bereitgestellt werden, zum Beispiel über ein Datennetzwerk wie das Internet oder eine Kommunikationsverbindung, wie etwa eine Telefonleitung oder drahtlose Verbindung.

Erfindungsgemäß wird außerdem eine Vorrichtung zur Unterstützung eines Fahrers eines Fahrzeugs vorgeschlagen, wobei die Vorrichtung ein Steuergerät umfasst, welche ein Fahrassistenzsystem implementiert, welches ein zumindest zeitweise autonomes Fahren des Fahrzeugs erlaubt. Ferner ist vorgesehen, dass das Steuergerät eingerichtet ist, eine Lenkung des Fahrzeugs für eine vorgegebene Zeitspanne zu versteifen.

Für das Versteifen der Lenkung ist das Steuergerät bevorzugt mit einem Steuergerät verbunden, welches eine Servolenkung implementiert, beispielsweise ein Lenkungssteuergerät.

Die Vorrichtung ist zur Durchführung der hierin beschriebenen Verfahren ausgebildet und/oder eingerichtet. Dementsprechend gelten im Rahmen des Verfahrens beschriebenen Merkmale entsprechend für die Vorrichtung und umgekehrt die im Rahmen der Vorrichtung beschriebenen Merkmale entsprechend für das Verfahren.

### Vorteile der Erfindung

Mit dem vorgeschlagenen Verfahren wird ein Fahrer eines Fahrzeugs unterstützt, wenn er nach einem automatisch durchgeführten Fahrmanöver zur Übernahme der Querführung des Fahrzeugs aufgefordert wird. Insbesondere wenn es sich bei dem Fahrzeug um ein hochautomatisiertes Fahrzeug handelt, welches eine Fahrt vollständig oder zumindest zu einem wesentlichen Teil vollautonom durchführt, so dass durch das Fahrzeug sowohl die Längs- als auch die Querführung übernommen wird, kann es vorkommen, dass der Fahrer erst mit einer Verzögerung die Lenkung übernimmt und dabei überreagiert, was zu einem Überreißen der Lenkung führen kann. Dieses Überreißen der Lenkung bzw. des Lenkrads durch den Fahrer ist umso wahrscheinlicher, je weniger sich der Fahrer auf den Verkehr konzentriert hat. Dabei kann insbesondere bei hohen Geschwindigkeiten von beispielsweise mehr als 100 km/h bereits ein versehentliches Verdrehen des Lenkrads um 15° zu einem Ausscheren des Fahrzeugs von mehr als 1 m führen, was im schlimmsten Fall einen Unfall zur Folge hat.

Vorteilhafter Weise wird durch das erfindungsgemäße Verfahren ein solches Überreißen der Lenkung vermieden, indem für eine vorgegebene Zeitspanne nach der Aufforderung zur Übernahme der Querführung die Lenkung versteift wird. Solange die Lenkung versteift ist, ist es für den Fahrer schwieriger, das Lenkrad versehentlich zu drehen. Des Weiteren ist es vorteilhafterweise möglich, durch ein Verringern der Lenkübersetzung die Folgen eines Überreißen des Lenkrads abzumildern.

In vorgeschlagenen Fortbildungen des Verfahrens werden die Dauer und die Stärke der Versteifung davon abhängig gemacht, ob eine Gefahrensituation vorliegt. Eine solche Situation kann beispielsweise bei hohen Geschwindigkeiten oder Hindernissen in der Umgebung des Fahrzeugs vorliegen. Auf diese Weise werden unnötige Eingriffe in das Fahrverhalten des Fahrzeugs in Situation, bei denen ein Überreißen der Lenkung folgenlos bleibt, vermieden. Der Fahrer fühlt sich dadurch nicht unnötig von dem Fahrassistenzsystem seines Fahrzeugs bevormundet.

Vorteilhafterweise sind in vielen Fällen zur Umsetzung des vorgeschlagenen Verfahrens keine zusätzlichen Mittel, d. h. Hardware im Fahrzeug erforderlich. Die Versteifung der Lenkung kann durch einen Eingriff in ein ohnehin vorhandenes elektrisch unterstütztes Lenksystem (EPS), auch bekannt als Servolenkung, erfolgen. Auch das Erkennen von potentiellen Gefährdungssituationen erfordert nicht die Anordnung zusätzlicher Sensoren, da diese für ein teilautonomes oder vollautonomes Fahren ohnehin benötigt werden und typischerweise bereits im Fahrzeug vorhanden sind. Es ist daher denkbar das erfindungsgemäße Fahrassistenzsystem nachträglich in einem Fahrzeug durch das Aufspielen angepasster Software oder mit Hilfe eines Nachrüstsatzes, der beispielsweise Sensoren und ein Steuergerät umfasst, zu installieren.

### Kurze Beschreibung der Zeichnungen

Ausführungsbeispiele der Erfindung sind in den Zeichnungen dargestellt und in den nachfolgenden Beschreibungen näher erläutert. Es zeigen:
Figur 1 das Einfahren eines Fahrzeugs in einen Baustellenbereich,
Figur 2 das Versteifen der Lenkung durch Reduzieren der Lenkunterstützung,
Figur 3 das Versteifen der Lenkung durch Aufbringen eines Gegenmoments und
Figuren 4A und 4B das Versteifen der Lenkung durch Reduzieren der Lenkübersetzung.

In der nachfolgenden Beschreibung der Ausführungsbeispiele der Erfindung werden gleiche oder ähnliche Komponenten mit gleichen Bezugszeichen bezeichnet, wobei auf eine wiederholte Beschreibung dieser Komponenten in Einzelfällen verzichtet wird. Die Figuren stellen den Gegenstand der Erfindung nur schematisch dar.

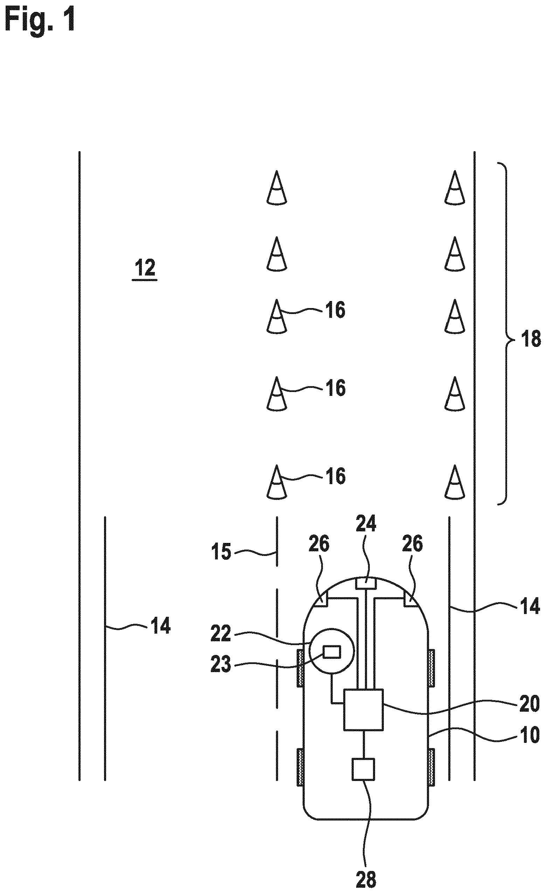

Figur 1 zeigt ein Fahrzeug, welches in einen Baustellenbereich einfährt.

Figur 1 zeigt ein Fahrzeug 10, welches auf einer Straße 12 fährt. Auf der Straße 12 befinden sich Markierungen 14, 15. Dabei begrenzen Fahrbahnbegrenzungen 14 den befahrbaren Bereich der Straße 12. Über Fahrspurmarkierungen 15 wird die Straße 12 in zwei Fahrspuren unterteilt. Das Fahrzeug 10 befindet sich auf der rechten Fahrspur.

Das Fahrzeug 10 umfasst ein Steuergerät 20, welches mit Abstandssensoren 26 und einer Kamera 24 in Verbindung steht. Ferner ist das Steuergerät 20 eingerichtet, sowohl die Längsführung als auch die Querführung des Fahrzeugs 10 zu übernehmen, so dass ein vollautonomes Fahren ermöglicht ist. Die Möglichkeit der Querführung ist in der Figur 1 durch eine Verbindung zwischen dem Steuergerät 20 und einem Lenkrad 22 des Fahrzeugs 10 angedeutet. Ferner umfasst das Fahrzeug einen GPS-Empfänger 28, um Satellitennavigationsdaten dem Steuergerät 20 zur Verfügung zu stellen.

Zum vollautonomen Fahren des Fahrzeugs 10 wird mit Hilfe der Abstandssensoren 26 die Umgebung des Fahrzeugs 10 auf Hindernisse überwacht. Des Weiteren werden von der Kamera 24 sowohl die Fahrspurbegrenzung 14 als auch die Fahrspurmarkierungen 15 auf der Straße 12 erfasst, so dass das Fahrzeug 10 ohne einen Eingriff durch den Fahrer der rechten Fahrspur der Straße 12 folgen kann. Das Fahrzeug 10 folgt somit dem Verlauf der Straße 12 selbsttätig, der Fahrer des Fahrzeugs 10 muss den Fahrvorgang lediglich überwachen.

In einem Baustellenbereich 18 auf der Straße 12 stehen jedoch weder die Fahrbahnbegrenzungen 14 noch die Fahrspurmarkierungen 15 zur Verfügung. Im Baustellenbereich 18 wird stattdessen die Fahrspur über Leitkegel 16 gekennzeichnet.

In der in Figur 1 gezeigten Situation muss das durch Steuergerät 20 implementierte Fahrassistenzsystem des Fahrzeugs 10 zumindest die Querführung an den Fahrer des Fahrzeugs 10 übergeben, da der weitere Verlauf der Fahrspur nicht mehr durch das Erfassen der Fahrbahnbegrenzungen 14 und der Fahrspurmarkierungen 15 über die Kamera 24 gewährleistet ist. Die Notwendigkeit der Übernahme der Querführung wird dem Fahrer über entsprechende Mittel, beispielsweise ein akustisches oder ein optisches Signal, mitgeteilt.

Um dem Fahrer eine ausreichend lange Übernahmezeit zu geben, innerhalb der er nach Gabe des Signals zur Übernahme der Querführung sich orientieren und einen Überblick über das Verkehrsgeschehen gewinnen kann, wird im Fall von bekannten Baustellenbereichen 18 bereits vor dem Erreichen des Baustellenbereichs 18 das Signal hierzu gegeben. Dazu wird die Position des Fahrzeugs 10 mithilfe des GPS-Empfängers 28 ermittelt und bei Annäherung an den Baustellenbereich 18 der Zeitpunkt für die Aufforderung zur Übernahme der Querführung dann gegeben, wenn unter Berücksichtigung der Geschwindigkeit des Fahrzeugs 10 das Fahrzeug 10 beispielsweise noch 7 Sekunden vom Baustellenbereich 18 entfernt ist

Wenn der Fahrer des Fahrzeugs 10 das Lenkrad 22 ergreift, dann kann es zu einem versehentlichen Lenkeinschlag bzw. einem Überreißen der Lenkung kommen. Dabei ist es möglich, dass das Fahrzeug 10 aus der Fahrspur ausschert und dabei entweder von der rechten Fahrspur in den Bereich der linken Fahrspur gerät oder gar die Straße 12 verlässt, was einen Unfall zur Folge hätte. Zur Vermeidung eines unbeabsichtigten Lenkeinschlags bzw. eines Überreißens der Lenkung ist erfindungsgemäß vorgesehen, die Lenkung des Fahrzeugs 10 vorübergehend für eine vorgegebene Zeitspanne zu versteifen.

Zum Versteifen der Lenkung kann das Steuergerät 20 auf eine Lenkunterstützung 23 einwirken. Eine solche Lenkunterstützung 23, beispielsweise als Servolenkung ausgeführt, erfasst das durch das Verdrehen des Lenkrads 22 durch den Fahrer auf ein Lenkgestänge ausgeübte Drehmoment, zum Beispiel 1,5 Nm. Anschließend wird durch die Lenkunterstützung 23 abhängig von einem Verstärkungsfaktor ein Lenkaktuator betätigt und ein weiteres Lenkmoment erzeugt. Beträgt der Verstärkungsfaktor beispielsweise 10, so würde in dem Beispiel für ein vom Fahrer aufgebrachtes Lenkmoment von 1,5 Nm durch den Lenkaktuator ein zusätzliches Lenkmoment von 15 Nm erzeugt werden. Zur Versteifung der Lenkung ist vorgesehen, für eine vorgegebene Zeitspanne, beispielsweise 700 ms, den Verstärkungsfaktor auf einen geringeren Wert festzulegen, beispielsweise auf einen Wert von 1. Der Fahrer muss dann innerhalb der vorgegebenen Zeitspanne, in der die Lenkung versteift ist, ein wesentlich größeres Lenkmoment ausüben, als im Normalzustand. Das Verdrehen des Lenkrads durch den Fahrer wird dadurch erschwert, was ein versehentliches Verdrehen bzw. Überreißen der Lenkung verhindert. In weiteren Ausführungsformen der Erfindung ist es zudem möglich, zur Versteifung der Lenkung ein dem vom Fahrer aufgebrachten Lenkmoment entgegengesetztes Gegenmoment zu erzeugen oder die Lenkübersetzung vom Ausschlag des Lenkrads zum Einschlag der Vorderräder des Fahrzeugs 10, zu reduzieren.

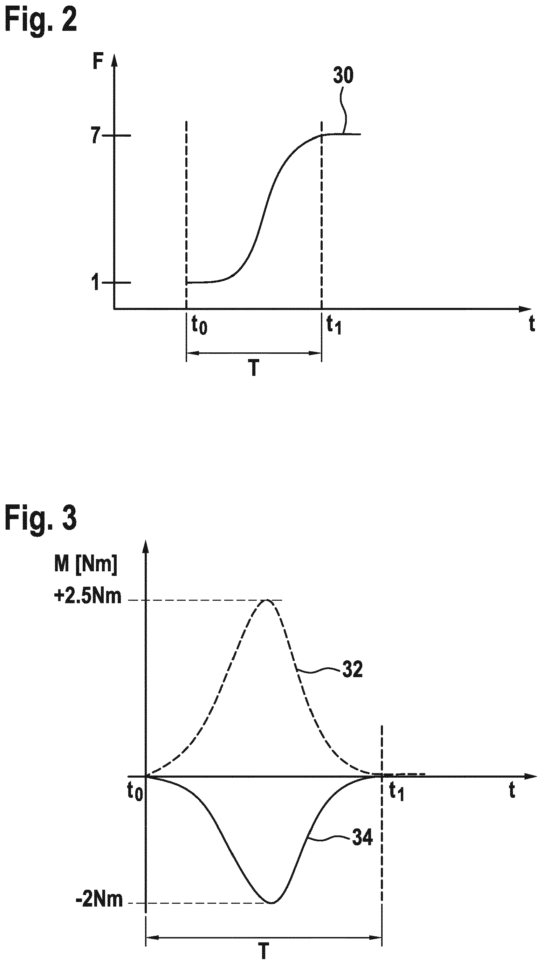

Figur 2 zeigt das Versteifen der Lenkung durch Verringern einer Lenkunterstützung.

In Figur 2 ist ein Diagramm dargestellt, welches den Verstärkungsfaktor einer Lenkunterstützung, insbesondere einer Servolenkung, in Abhängigkeit der Zeit zeigt. Dabei ist in der in Figur 2 der zeitliche Verlauf des Verstärkungsfaktors F mit dem Bezugszeichen 30 gekennzeichnet.

Der Verstärkungsfaktor F beträgt normalerweise in dem gezeigten Beispiel 7 und ist zum Zeitpunkt to, an dem die vorgegebene Zeitspanne T beginnt, auf den Faktor 1 reduziert. Die vorgegebene Zeitspanne T endet zum Zeitpunkt ti, wobei der Verstärkungsfaktor F wieder seinen normalen Wert von 7 erreicht. Innerhalb der vorgegebenen Zeitspanne T variiert der Verstärkungsfaktor F, wobei er mit der Zeit ansteigt.

In Figur 3 ist das Versteifen der Lenkung durch das Aufbringen eines Gegenmoments dargestellt.

Figur 3 zeigt den Verlauf eines vom Fahrer aufgebrachten Lenkmoments 32 sowie eines Gegenmoments 34 mit der Zeit t, wobei die Momente M in der Einheit Nm angegeben sind. Dabei ist vorgesehen, innerhalb der vorgegebenen Zeitspanne T den Verstärkungsfaktor der Lenkunterstützung bzw. der Servolenkung auf einen Wert von beispielsweise -0,8 festzusetzen. Dadurch wird erreicht, dass entsprechend dem vom Fahrer aufgebrachten Lenkmoment 32 ein entgegengesetztes Gegenmoment erzeugt wird. Das Gegenmoment steigt betragsmäßig an, wenn das vom Fahrer aufgebrachte Lenkmoment ansteigt und sinkt wieder ab, wenn das vom Fahrer aufgebrachte Lenkmoment 32 sinkt. Dabei entspricht dem Maximum des Lenkmoments 32 von 2,5 Nm das betragsmäßige Maximum von -2 Nm beim Gegenmoment 34 für den Fall, dass der Verstärkungsfaktor auf -0,8 festgelegt wird. In dem in Figur 3 dargestellten Beispiel ist während der vorgegebenen Zeitspanne T, die zum Zeitpunkt t₀ beginnt und zum Zeitpunkt t₁ endet, der Verstärkungsfaktor konstant auf den Wert -0,8 festgesetzt. In weiteren Ausführungsformen wäre es jedoch denkbar, ähnlich wie mit Bezug zu Figur 2 beschrieben, den Verstärkungsfaktor variabel zu wählen.

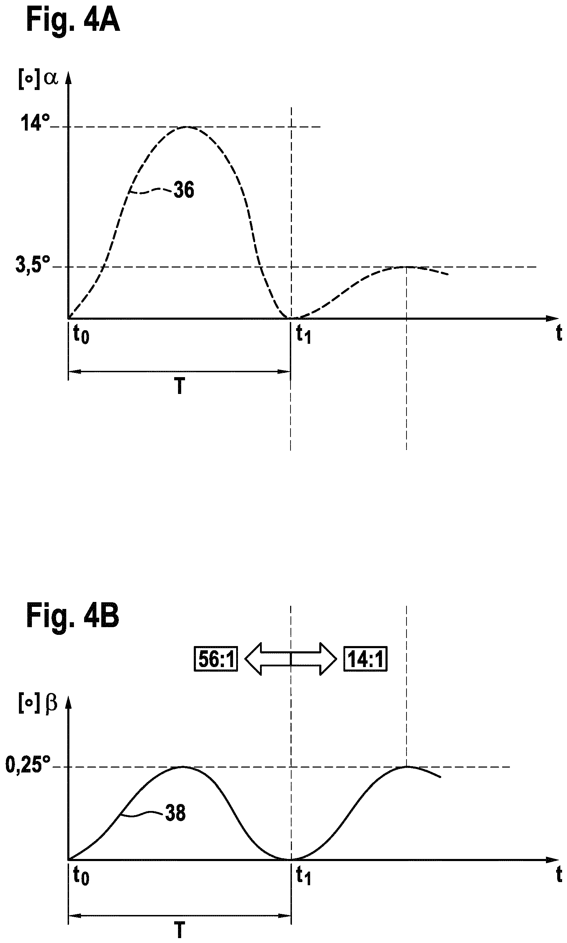

Figuren 4A und 4B zeigen das Versteifen der Lenkung durch Reduktion der Lenkübersetzung.

In Figur 4A ist der Lenkradwinkel α für den Lenkradeinschlag gegenüber der Zeit t als Kurve 36 dargestellt. In Figur 4B ist dazu die tatsächliche Drehung der Vorderräder in Form eines Radlenkwinkels β als Kurve 38 eingezeichnet. In dem in den Figuren 4A und 4B dargestellten Beispiel ist die Lenkübersetzung während der vorgegebenen Zeitspanne T um den Faktor 4 verändert und beträgt damit 56 : 1. Normalerweise beträgt die Lenkübersetzung 14 : 1. Aufgrund der während der vorgegebenen Zeitspanne T reduzierten Lenkübersetzung wird eine Lenkbewegung des Fahrers nur im reduzierten Maß auf die Vorderräder übertragen. So wird beispielsweise bei einem Lenkradeinschlag von 16° nur ein Radlenkwinkeleinschlag von 0,25° anstelle von 1° auf die Vorderräder des Fahrzeugs übertragen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Assistenz eines Fahrers eines Fahrzeugs (10), wobei das Fahrzeug (10) ein Fahrassistenzsystem umfasst, welches zumindest ein zeitweiliges autonomes Fahren ermöglicht und nach dem Beenden des autonomen Fahrens den Fahrer über ein Signal zur Übernahme der Querführung des Fahrzeugs (10) auffordert, wobei die Lenkung des Fahrzeugs (10) nach der Aufforderung zur Übernahme der Querführung für eine vorgegebene Zeitspanne (T) versteift wird, **dadurch gekennzeichnet, dass** das Versteifen der Lenkung erfolgt durch
a) Verringern einer Lenkunterstützung innerhalb der vorgegebenen Zeitspanne (T) und/oder
b) Aufbringen eines Gegenmoments, welches einer Lenkbewegung des Fahrers entgegengesetzt ist, wenn die Lenkbewegung innerhalb der vorgegebenen Zeitspanne (T) erfolgt und/oder
c) Verändern einer Lenkübersetzung während der vorgegebenen Zeitspanne (T) derart, dass Lenkradeinschläge verringerte Radlenkwinkeleinschläge zur Folge haben,
wobei die vorgegebene Zeitspanne (T) in Abhängigkeit der Geschwindigkeit des Fahrzeugs (10), eines Abstands zu einem Hindernis, eines Abstands zu einer Fahrspurbegrenzung (14) oder einer Kombination von mehreren dieser Parameter gewählt wird und wobei
die vorgegebene Zeitspanne (T) für die Versteifung der Lenkung mit dem Zeitpunkt beginnt, an dem der Fahrer an ein Lenkrad (22) fasst oder die vorgegebene Zeitspanne (T) mit dem Zeitpunkt beginnt, an dem der Fahrer mit dem Lenken beginnt.

2. Verfahren nach Anspruch 1, **dadurch gekennzeichnet, dass** die Stärke der Versteifung abhängig von der Fahrgeschwindigkeit des Fahrzeugs (10) vorgenommen wird, wobei die Versteifung mit zunehmender Geschwindigkeit des Fahrzeugs (10) ansteigt.

3. Verfahren nach Anspruch 1 oder 2, **dadurch gekennzeichnet, dass** die Versteifung der Lenkung des Fahrzeugs abhängig von der Lenkrichtung erfolgt, wobei die Versteifung beim Lenken in Richtung eines Hindernisses oder einer Fahrspurbegrenzung (14) stärker ist, als beim Lenken in Richtung einer freien Fläche.

4. Computerprogramm das das Verfahren nach einem der Ansprüche 1 bis 3 ausführt, wenn es auf einem Computer abläuft.

5. Fahrassistenzsystem, wobei das Fahrassistenzsystem ein Steuergerät (20) umfasst welches ein zumindest zeitweise autonomes Fahren des Fahrzeugs (10) erlaubt, **dadurch gekennzeichnet, dass** das Steuergerät (20) eingerichtet ist, eine Lenkung des Fahrzeugs (10) für eine vorgegebene Zeitspanne (T) zu versteifen, wobei das Fahrerassistenzsystem eingerichtet ist, das Verfahren nach einem der Ansprüche 1 bis 3 auszuführen.

## Claims

1. Method for assisting a driver of a vehicle (10), wherein the vehicle (10) comprises a driving assistance system which permits at least temporary autonomous driving, and after the end of the autonomous driving requests the driver, by means of a signal, to take over the lateral guidance of the vehicle (10), wherein after the request to take over lateral guidance the steering of the vehicle (10) is stiffened for a predefined time period (T), **characterized in that** the steering is stiffened by
a) reducing power steering assistance within the predefined time period (T) and/or
b) apply an opposing torque which is opposed to a steering movement of the driver if the steering movement takes place within the predefined time period (T), and/or
c) changing a steering transmission ratio during the predefined time period (T) in such a way that steering wheel lock values result in reduced wheel steering lock values,
wherein the predefined time period (T) is selected as a function of the speed of the vehicle (10), a distance from an obstacle, a distance from a lane boundary (14) or a combination of a plurality of these parameters, and
wherein
the predefined time period (T) for the stiffening of the steering starts at the time at which the driver grips a steering wheel (22) or the predefined time period (T) starts at the time at which the driver starts to steer.

2. Method according to Claim 1, **characterized in that** the extent of stiffening is implemented as a function of the velocity of the vehicle (10), wherein the stiffening becomes greater as the speed of the vehicle (10) increases.

3. Method according to Claim 1 or 2, **characterized in that** the stiffening of the steering of the vehicle takes place as a function of the steering direction, wherein the stiffening is greater when steering in the direction of an obstacle or a lane boundary (14) than when steering in the direction of a clear area.

4. Computer programme which carries out the method according to one of Claims 1 to 3 when it runs on a computer.

5. Driving assistance system, wherein the driving assistance system comprises a control unit (20) which permits at least temporarily autonomous driving of the vehicle (10), **characterized in that** the control unit (20) is configured to stiffen steering of the vehicle (10) for a predefined time period (T), wherein the driving assistance system is configured to carry out the method according to one of Claims 1 to 3.

## Revendications

1. Procédé d'aide au conducteur d'un véhicule (10), dans lequel le véhicule (10) comprend un système d'aide à la conduite qui permet une conduite au moins temporairement autonome, et à l'issue de la conduite autonome, invite le conducteur, à l'aide d'un signal, à reprendre le guidage transversal du véhicule (10), dans lequel la direction du véhicule (10), après l'invitation à reprendre le guidage transversal, est durcie pendant une période de temps spécifiée (T), **caractérisé en ce que** le durcissement de la direction est effectué par
a) la diminution d'une direction assistée à l'intérieur de la période de temps spécifiée (T), et/ou
b) l'application d'un couple résistant opposé au mouvement de direction du conducteur si le mouvement de direction a lieu à l'intérieur de la période de temps spécifiée (T), et/ou
c) la modification d'une démultiplication de direction pendant la période de temps spécifiée (T) de telle sorte que des angles de rotation du volant entraînent des angles de braquage de roue diminués,
dans lequel la période de temps spécifiée (T) est choisie en fonction de la vitesse du véhicule (10), d'une distance par rapport à un obstacle, d'une distance par rapport à une limite de voie de circulation (14) ou d'une combinaison de plusieurs de ces paramètres, et
dans lequel la période de temps spécifiée (T) pour le durcissement de la direction commence à l'instant où le conducteur saisit un volant (22), ou la période de temps spécifiée (T) commence à l'instant où le conducteur commence à conduire.

2. Procédé selon la revendication 1, **caractérisé en ce que** le degré du durcissement est mis en œuvre en fonction de la vitesse de déplacement du véhicule (10), le durcissement augmentant avec une vitesse croissante du véhicule (10).

3. Procédé selon la revendication 1 ou 2, **caractérisé en ce que** le durcissement de la direction du véhicule est effectué en fonction du sens de direction, le durcissement étant plus fort en cas de conduite vers un obstacle ou une limite de voie de circulation (14) qu'en cas de conduite vers un espace dégagé.

4. Programme informatique effectuant le procédé selon l'une quelconque des revendications 1 à 3 s'il est exécuté sur un ordinateur.

5. Système d'aide à la conduite, dans lequel le système d'aide à la conduite comprend un contrôleur (20) permettant une conduite au moins temporairement autonome du véhicule (10), **caractérisé en ce que** le contrôleur (20) est aménagé pour durcir une direction du véhicule (10) pendant une période de temps spécifiée (T), le système d'aide à la conduite étant aménagé pour effectuer le procédé selon l'une quelconque des revendications 1 à 3.
